(19) Europäisches Patentamt
European Patent Office
Office européen des brevets

(11) Publication number: **0 062 830**
**B1**

(12) # EUROPEAN PATENT SPECIFICATION

(45) Date of publication of patent specification: **27.12.85**

(21) Application number: **82102655.6**

(22) Date of filing: **30.03.82**

(51) Int. Cl.$^4$: **C 08 L 81/02,** C 08 L 71/00, C 08 L 65/00

(54) **Alloys of a poly(arylene sulfide) and a poly(aryl ketone).**

(30) Priority: **30.03.81 US 249006**

(43) Date of publication of application:
**20.10.82 Bulletin 82/42**

(45) Publication of the grant of the patent:
**27.12.85 Bulletin 85/52**

(84) Designated Contracting States:
**AT BE CH DE FR GB IT LI LU NL SE**

(56) References cited:
**GB-A-1 446 962**
**GB-A-2 039 503**
**US-A-4 021 596**

(73) Proprietor: **UNION CARBIDE CORPORATION**
**Old Ridgebury Road**
**Danbury Connecticut 06817 (US)**

(72) Inventor: **Robeson, Lloyd Mahlon**
**RD 1, Box 244**
**Whitehouse Station New Jersey 08889 (US)**

(74) Representative: **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

**EP 0 062 830 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention is directed to an alloy comprising a poly(arylene sulfide) and a poly(arylether ketone).

Poly(arylether ketone)s are a relatively new class of engineering polymers. Several poly(arylether ketone)s are crystalline and exhibit an excellent combination of properties, i.e., excellent thermal and hydrolytic stability, high strength and toughness, excellent wear and abrasion resistance and excellent solvent resistance. Thus articles molded from poly(arylether ketone)s have utility where high performance is required. Two of these crystalline poly(arylether ketones) are commercially available and are of the following structure:

(I) 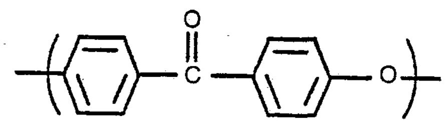

(II) 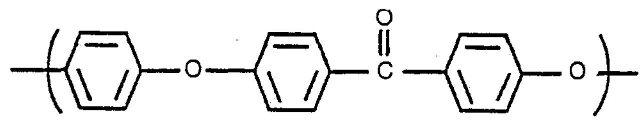

To achieve the desired combination of properties, high molecular weight poly(arylether ketone)s are necessary. These high molecular weight poly(arylether ketone)s have a narrow processing latitude and require very high processing temperatures (about 400°C) during molding.

Many materials which could act as a plasticizer or processing aid for the poly(arylether ketone)s are not stable at such a high processing temperature. Also, most polymers do not have adequate thermal stability at such processing temperatures to allow them to be blended with the poly(arylether ketone).

Thus, there is a desire to improve the processing of poly(arylether ketone)s, particularly in the presence of fibers and fillers which decrease the processing range.

It has been found that the addition of a poly(arylene sulfide) to a poly(arylether ketone) results in improved processing of the poly(arylether ketone) in that it can be processed at lower temperatures. Additionally, the alloy of poly(arylene sulfide) and poly(arylether ketone) has an excellent balance of properties and unexpectedly higher flexural strength than would be expected from the weight averaged constituent values.

GB—A—1 446 962 describes thermoplastic compositions comprising an aromatic polyether ketone having repeating units of the formula —Ar—CO— in which up to 25% of the —CO— groups may be replaced by —$SO_2$— groups and at least one specific organic phosphorus compound. It is also described that the above mentioned polyether ketones may be blended with other thermoplastic polymeric substances. However, polyarylene sulfides are missing in the given list of a variety of polymers suitable for that purpose.

In US—A—4 021 596 polyphenylene sulfide resin containing thermoplastic resin alloys are disclosed. As resins which may also be present in said alloys polyarylsulfones, polyphenylene oxides and polyarylcarbonates are recommended; polyarylether ketones are not even mentioned in said reference.

This invention is directed to an alloy comprising from 2 to 98 weight percent of a poly(arylene sulfide) and from 98 to 2 weight percent of a poly(arylether ketone).

The Drawing shows a plot of tensile and flexural strengths versus the amount of poly(arylether ketone) of formula II above referred to as poly(ether ether ketone) in the alloy. Line A represents the calculated tensile strength of the materials in the alloy and represents mechanical compatibility. The notation X represents the actual tensile strength values measured on the alloy. The tensile strength values determined show that the poly(ether ether ketone) and poly(phenylene sulfide) are mechanically compatible. Line B represents the calculated flexural strength of the materials in the alloy and represents mechanical compatibility. Line C represents that the flexural strength of the alloy is much higher than would be expected from the flexural strength values of the constituents in the alloy.

The poly(arylene sulfide)s which are suitable for use herein are solid, have a melting point of at least 66°C (150°F) and are insoluble in common solvents. Such resins can be conveniently prepared by the process disclosed in, for example US—A—3 354 129. Briefly, the process comprises the reaction of an alkali metal sulfide and a polyhalo ring-substituted aromatic compound in the presence of a suitable polar organic compound, as for example, the reaction of sodium sulfide with dichlorobenzene in the presence of N-methyl-2-pyrrolidone to form poly(phenylene sulfide).

The resulting polymer contains the aromatic nucleus of the polyhalo-substituted monomer coupled in repeating units predominantly through a sulfur atom. The polymers which are preferred for use according to this invention are those polymers having the repeating unit —R—S— where R is phenylene, biphenylene, naphthylene, or a lower alkyl-substituted derivative thereof. By "lower alkyl" is meant alkyl groups having one to six carbon atoms such as methyl, propyl, isobutyl and n-hexyl.

The preferred poly(arylene sulfide) is poly(phenylene sulfide), a crystalline polymer with a repeating structural unit comprising a para-substituted benzene ring and a sulfur atom which may be described by the following formula, where n has a value of at least 50.

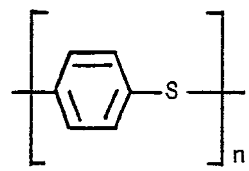

Suitable poly(phenylene sulfide) compositions are available commercially under the trade name RYTON® of the Phillips Petroleum Company, and include compositions which are either unfilled, or filled with fiberglass or some such conventional material. Preferably, the poly(phenylene sulfide) component has a melt flow index, measured at 316°C (600°F) using a 5 kg weight and a standard orifice, within the range of from 10 to 7000.

The term poly(arylene sulfide) is meant to include not only homopolymers but also normally solid arylene sulfide copolymers, terpolymers and the like.

The poly(arylether ketone)s which are suitable for use herein contain repeating units of the following formula:

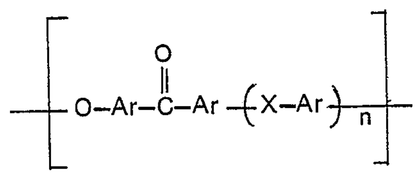

wherein Ar is independently a divalent aromatic radical selected from phenylene, biphenylene or naphthylene, X is independently O,

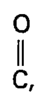

or a direct bond, and n is an integer of from 0 to 3.

Preferably, the poly(arylether ketone) contains repeating units of the following formula:

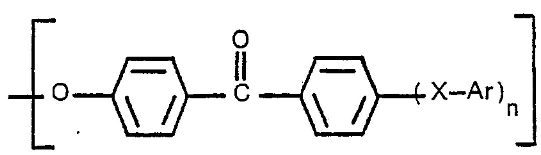

wherein Ar, X, and n are as previously defined.

The most preferred poly(aryl ketone)s have repeating units of the formula:

(I) 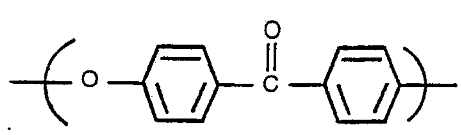 or

(II) 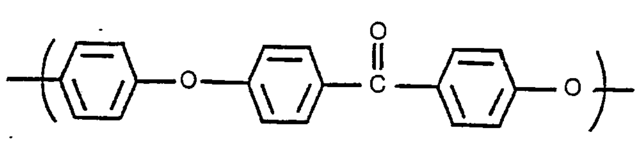

These poly(aryl ketone)s are prepared by methods well known in the art, such as by heating a substantially equimolar mixture of at least one bisphenol and at least one dihalobenzenoid compound or at least one halophenol compound. Preferred bisphenols include:

hydroquinone,
4,4′-dihydroxybenzophenone,
4,4′-dihydroxybiphenyl, and
2,2′-bis(4-hydroxyphenyl)propane.

Preferred dihalo and dihalobenzenoid compounds include:

4-(4-chlorobenzoyl) phenol,
4,4′-difluorobenzophenone,
4,4′-dichlorobenzophenone, and
4-chloro-4′-fluorobenzophenone.

The poly(arylether ketone)s may be produced by the process as described in US—A—4,176,222. This process comprises heating in the temperature range of 100° to 400°C, (i) a substantially equimolar mixture of (a) at least one bisphenol and (b) at least one dihalobenzenoid compound, or (ii) at least one halophenol, in which in the dihalobenzenoid compound or halophenol, the halogen atoms are activated by —CO— groups ortho or para thereto, with a mixture of sodium carbonate or bicarbonate and a second alkali metal carbonate or bicarbonate, the alkali metal of said second alkali metal carbonate or bicarbonate having a higher atomic number than that of sodium, the amount of said second alkali metal carbonate or bicarbonate being such that there are 0.001 to 0.2 gram atoms of said alkali metal of higher atomic number per gram atom of sodium, the total amount of alkali metal carbonate or bicarbonate being such that there is at least one alkali metal atom for each phenol group present, and thereafter separating the polymer from the alkali metal halide.

Poly(arylether ketone)s containing repeating units of the following formula:

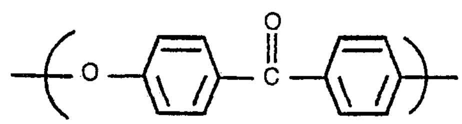

may also be prepared by methods described in US—A—3,953,400. This process comprises polymerizing monomers reactive under Friedel-Crafts acylating conditions in the presence of an aromatic capping agent whose rate of acylation relative to benzene is greater than 150. The polymerization is generally catalyzed by boron trifluoride.

The term poly(arylether ketone) is meant to include homopolymers, copolymers, terpolymers, and the like.

The poly(arylether ketone)s have a reduced viscosity of at least 0.6 to 3.0, as measured in concentrated sulphuric acid at 25°C.

The alloys of this invention are prepared by conventional methods as by mixing a dry powder or pellet, e.g. in a blender, followed by further mixing in an extruder, or other suitable compounding device, under conditions such that the resins employed will melt.

The poly(arylene sulfide) and poly(arylether ketone) are preferably combined in amounts of from 10 to 90 weight percent.

The blends of poly(arylene sulfide) and poly(arylether ketone) with added filler or fiberglass, or both, are of particular interest herein. Inorganic fillers such as talc, wollastonite, mica, calcium carbonate, clay, silica and glass spheres are suitable for use in the blend.

The alloys may contain conventional additives such as fibers, dyes, pigments, flame retardant additives, thermal stabilizers and ultraviolet light stabilizers.

The additives may be added to the individual resins before formation or during formation of the alloy, or after formation of the alloy upon a subsequent melting of the alloy. The alloys may also contain at least one thermoplastic polymer, such as an aromatic polysulfone, an aromatic polycarbonate or an aromatic polyhydroxyether.

## Examples

The following examples serve to give specific illustrations of the practice of this invention.

### Example 1

80 weight percent of a poly(arylether ketone) of the following formula:

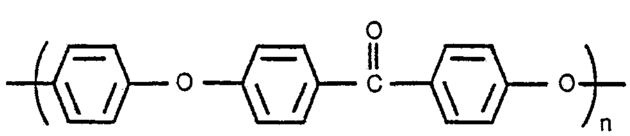

having a reduced viscosity of 1.2 as measured in a 96 percent sulfuric acid solution (one percent polymer solution) at 25°C was blended with 20 weight percent of a poly(phenylene sulfide) (Ryton R—10® supplied by Phillips Petroleum Company) in a 35 ml (1¼ ounce) Newbury® screw injection molding machine at 343—354°C (650—670°F). Pellets of the two resins were used. The poly(phenylene sulfide) contains both mineral filler and fiberglass as supplied. The resins were injection molded into ASTM test bars and tested for the following properties: tensile modulus and tensile strength according to ASTM D—638; percent elongation according to ASTM—D—638; tensile impact strength according to ASTM D—1822; notched izod impact strength according to ASTM D—256; heat distortion temperature according to ASTM D—635 [1.8 N/$mm^2$ (264 psi); 0.3 cm (⅛ inch) bar]; flexural strength and flexural modulus according to ASTM D—790. The results are shown in Table I.

Table I also shows the molding conditions in preparing the alloy.

Example 2

60 weight percent of the poly(arylether ketone) described in Example 1 was blended with 40 weight percent of the poly(phenylene sulfide) described in Example 1 by the procedure as described in Example 1.

The resins were molded into test bars and tested by the procedures as described in Example 1.

The results are shown in Table I.

Example 3

20 weight percent of the poly(arylether ketone) described in Example 1 was blended with 80 weight percent of the poly(phenylene sulfide) described in Example 1 by the procedure as described in Example 1.

The resins were molded into test bars and tested by the procedures as described in Example 1.

The results are shown in Table I.

In Table I, Control A is the poly(arylether ketone), i.e., PAEK and Control B is the poly(phenylene sulfide), i.e., PPS.

It is of interest to note that lower temperature and/or injection pressures were achieved with addition of the highly filled poly(phenylene sulfide) (fiber and filler content 50 weight percent) to the poly(arylether ketone). Without the fiber and mineral filler, a much greater degree of plasticization and thus lowering of molding conditions would be expected. Likewise, if fiberglass and filler were added to the poly(arylether ketone) without simultaneously adding the poly(phenylene sulfide), the molding temperatures and/or pressures would have been more severe.

It is unexpected that the blend compositions would exhibit higher flexural strengths than either of the unblended constituents. This synergistic behavior clearly illustrates the mechanical compatibility of this blend.

TABLE I

| Example | Control A | Control B | Example 1 | Example 2 | Example 3 |
|---|---|---|---|---|---|
| Composition | | | | | |
| Ingredients (amount) | PAEK (100) | PPS (100) (composite) | PAEK (80) PPS (20) | PAEK (60) PPS (20) | PAEK (20) PPS (80) |
| Properties | | | | | |
| Tensile Modulus $N/mm^2$ (psi) | 3660 (531 000) | 29 700 (4 310 000) | 4730 (687 000) | 6380 (926 000) | 17 400 (2 530 000) |
| Tensile Strength $N/mm^2$ (psi) | 88.9 (12 900) | 58.2 (8 440) | 86.1 (12 500) | 86.1 (12 500) | 62.8 (9 120) |
| Elongation (%) | 98 | 0.28 | 16.7 | 2.5 | 0.43 |
| Tensile Impact Strength $Nm/cm^2$ ($ft\text{-}lbs/in^2$) | 25.8 (123) | 1.1 (5) | 8.0 (38) | 2.5 (12) | 1.3 (6) |
| Notched Izod Impact Strength Nm/cm (ft-lbs/in) of notch | 0.9 (1.7) | 0.26 (0.48) | 0.75 (1.4) | 0.53 (1.0) | 0.44 (0.83) |
| Heat Distortion Temperature, °C | 143 | 254 | 147 | 159 | 247 |
| Flexural Modulus $N/mm^2$ (psi) | 3410 (494 000) | 18 900 (2 740 000) | 4420 (641 000) | 6680 (968 000) | 13 200 (1 920 000) |
| Flexural Strength $N/mm^2$ (psi) | 132 (19 200) | 103 (14 900) | 141 (20 400) | 151 (21 900) | 119 (17 300) |
| Molding Conditions | | | | | |
| Temperature | | | | | |
| Rear, °C (°F) | 360 (680) | 299 (570) | 354 (670) | 354 (670) | 343 (650) |
| Mid, °C (°F) | 354 (670) | 293 (560) | 349 (660) | 349 (660) | 338 (640) |
| Nozzle, °C (°F) | 349 (660) | 293 (560) | 343 (650) | 343 (650) | 332 (630) |
| Mold Temperature, °C | 130 | 150 | 140 | 140 | 140 |
| Revolutions per minute | 80 | 140 | 100 | 130 | 130 |
| Injection Pressure, bar (psi) | 65 (950) | 45 (650) | 69 (1000) | 62 (900) | 45 (650) |
| Cycle Time, sec | 52 | 52 | 52 | 52 | 52 |

Example 4

75 weight percent of the poly(arylether ketone) described in Example 1 was blended with 25 weight percent of the poly(phenylene sulfide) described in Example 1. The resins were blended in a Brabender mixer at 360°C. The blend was then compression molded at 360°C. The secant modulus at various temperatures was described as shown in Table II. Also the modulus ratio of the blend to poly(arylether ketone) is shown in Table II.

Control A is the poly(arylether ketone).

TABLE II

| Example | Control A | | Example 1 | | Modulus Ratio of Example 1: Control A |
|---|---|---|---|---|---|
| Composition | | | | | |
| Ingredients (amounts) | PAEK (100) | | PAEK[1] (75)<br>PPS (25) | | |
| Temperature °C | Secant Modulus (1%) | | | | |
| | $N/mm^2$ | (psi) | $N/mm^2$ | (psi) | |
| 100 | 2136 | (310,000) | 2549 | (370,000) | 1.19 |
| 150 | 999 | (145,000) | 1137 | (165,000) | 1.14 |
| 175 | 372 | ( 54,000) | 620 | ( 90,000) | 1.67 |
| 200 | 303 | ( 44,000) | 469 | ( 68,000) | 1.55 |
| 250 | 179 | ( 26,000) | 296 | ( 43,000) | 1.65 |
| 300 | 86 | ( 12,500) | 131 | ( 19,000) | 1.52 |

[1]PAEK = poly(arylether ketone)
PPS = poly(phenylene sulfide) composite

The data in the Table shows that the addition of the filled poly(phenylene sulfide) improves the stiffness of poly(arylether ketone), particularly at elevated temperatures, i.e., greater than 150°C.

Example 5

30 weight percent of the poly(arylether ketone) described in Example 1, 30 weight percent of the poly(phenylene sulfide) described in Example 1, and 40 weight percent of polysulfone (P—1700 supplied by Union Carbide Corporation) having a reduced viscosity of 0.48 as measured in chloroform at 25°C (0.2 g/dl), were blended by mixing pellets of each of the resins and injection molding the pellet mixture into ASTM test bars in an injection molding machine as described in Example 1. The test bars were tested for the properties as described in Example 1. The results are as follows:

| | | |
|---|---|---|
| Tensile modulus $N/mm^2$ (psi) | 4330 | (628 000) |
| Tensile strength $N/mm^2$ (psi) | 77.2 | (11 200) |
| Elongation (%) | | 10 |
| Notched Izod Impact Strength Nm/cm (ft-lbs/in) of notch | 0.64 | (1.2) |
| Flexural modulus $N/mm^2$ (psi) | 4820 | (700 000) |
| Flexural strength $N/mm^2$ (psi) | 135 | (19 550) |
| Calculated Tensile Strength $N/mm^2$ (psi) | 71.7 | (10 400) |
| Calculated Flexural Strength $N/mm^2$ (psi) | 113 | (16 400) |

As both the actual tensile and flexural strength of the blend are higher than the calculated weight averaged constituent values, this ternary blend exhibits better strength than that expected even for a mechanically compatible system.

**Claims**

1. An alloy comprising from 2 to 98 weight percent of a poly(arylene sulfide) and from 98 to 2 weight percent of a poly(arylether ketone)

2. An alloy as described in claim 1 wherein the poly(arylene sulfide) is poly(phenylene sulfide).

3. An alloy as described in claim 2 wherein the poly(phenylene sulfide) is of the following formula:

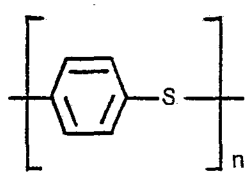

wherein n is at least 50.

4. An alloy as defined in claims 2 or 3 wherein the poly(phenylene sulfide) contains a filler and/or fiber.

5. An alloy as defined in any of the preceding claims wherein the poly(arylether ketone) is of the following formula:

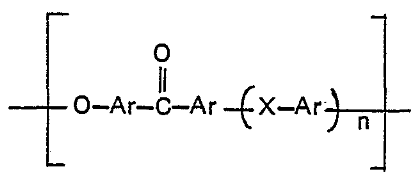

wherein Ar is independently a divalent aromatic radical selected from phenylene, biphenylene, or naphthylene, X is independently O,

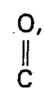

or a direct bond, and n is an integer of from 0 to 3.

6. An alloy as defined in claims 1 to 5 wherein the poly(arylether ketone) is of the following formula:

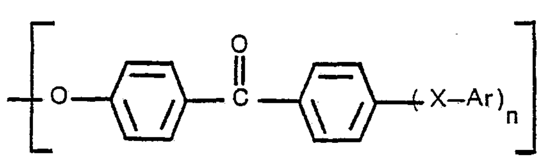

wherein Ar is independently a divalent aromatic radical selected from phenylene, biphenylene, or naphthylene, X is independently O,

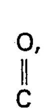

or a direct bond and n is an integer of from 0 to 3.

7. An alloy as defined in claims 1 or 5 or 6 wherein the poly(arylether ketone) has repeating units of the formula:

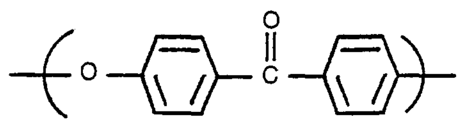

or

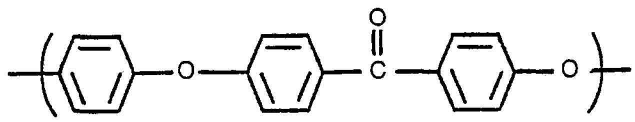

8. An alloy as defined in any of the preceding claims wherein the poly(arylene sulfide) and poly(arylether ketone) are combined in amounts of from 10 to 90 weight percent.

9. An alloy as defined in any of the preceding claims wherein the alloy additionally contains at least one thermoplastic polymer.

10. An alloy as defined in claim 9 wherein the thermoplastic polymer is an aromatic polysulfone, an aromatic polycarbonate or an aromatic polyhydroxyether.

**Patentansprüche**

1. Legierung, enthaltend 2 bis 98 Gew.-% eines Poly(arylensulfids) und 98 bis 2 Gew.-% eines Poly(aryletherketons).

2. Legierung nach Anspruch 1, worin das Poly(arylensulfid) Poly(phenylensulfid) ist.

3. Legierung nach Anspruch 2, worin das Poly(phenylensulfid) die folgende Formel hat:

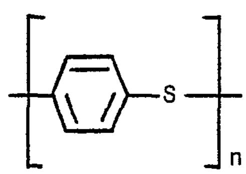

worin n mindestens 50 ist.

4. Legierung nach Anspruch 2 oder 3, worin das Poly(phenylensulfid) einen Füllstoff und/oder Fasern enthält.

5. Legierung nach irgendeinem der vorangehenden Ansprüche, worin das Poly(aryletherketon) die folgende Formel hat:

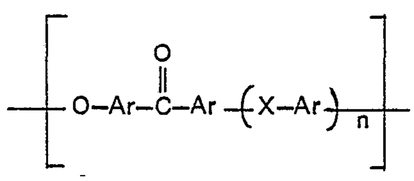

worin Ar unabhängig ein zweiwertiger aromatischer Rest, ausgewählt unter Phenylen, Biphenylen oder Naphthylen, ist, X unabhängig O,

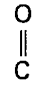

oder eine direkte Bindung ist und n eine ganze Zahl von 0 bis 3 ist.

6. Legierung nach den Ansprüchen 1 bis 5, worin das Poly(aryletherketon) die folgende Formel hat:

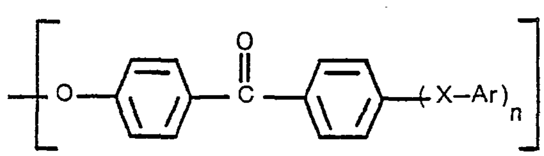

worin Ar unabhängig ein zweiwertiger aromatischer Rest, ausgewählt unter Phenylen, Biphenylen oder Naphthylen, ist, X unabhängig O,

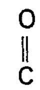

oder eine direkte Bindung ist, und n eine ganze Zahl von 0 bis 3 ist.

7. Legierung nach den Ansprüchen 1 oder 5 oder 6, worin das Poly(aryletherketon) Struktureinheiten der Formel:

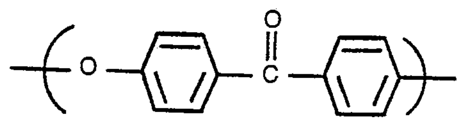

oder

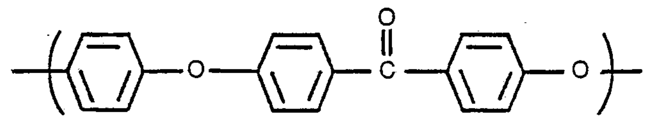

hat.

8. Legierung nach irgendeinem der vorangehenden Ansprüche, worin das Poly(arylensulfid) und das Poly(aryletherketon) in Mengen von 10 bis 90 Gew.-% kombiniert sind.

9. Legierung nach irgendeinem der vorangehenden Ansprüche, worin die Legierung zusätzlich mindestens ein thermoplastisches Polymer enthält.

10. Legierung nach Anspruch 9, worin das thermoplastische Polymer ein aromatisches Polysulfon, ein aromatisches Polycarbonat oder ein aromatischer Polyhydroxyether ist.

**Revendications**

1. Alliage comprenant 2 à 98% en poids d'un poly(sulfure d'arylène) et 98 à 2% en poids d'une poly(aryléther-cétone).

2. Alliage suivant la revendication 1, dans lequel le poly(sulfure d'arylène) est un poly(sulfure de phénylène).

3. Alliage suivant la revendication 2, dans lequel le poly(sulfure de phénylène) répond à la formule suivante:

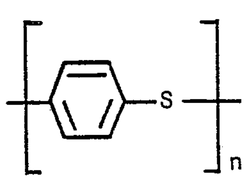

dans laquelle n est au moins égal à 50.

4. Alliage suivant la revendication 2 ou 3, dans lequel le poly(sulfure de phénylène) contient une charge et/ou une matière fibreuse.

5. Alliage suivant l'une quelconque des revendications précédentes, dans lequel la poly(aryléther-cétone) répond à la formule suivante:

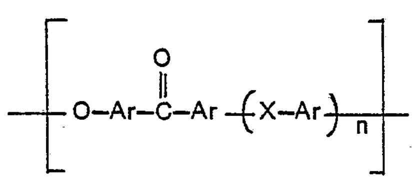

dans laquelle Ar représente indépendamment un radical aromatique divalent choisi entre phénylène, biphénylène et naphtylène, X représente indépendamment O,

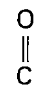

ou une liaison directe et n est un nombre entier de 0 à 3.

6. Alliage suivant les revendications 1 à 5, dans lequel la poly(aryléther-cétone) répond à la formule suivante:

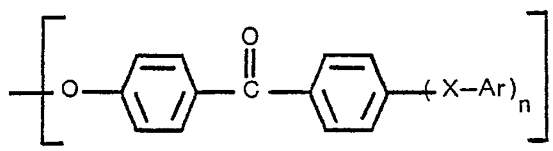

dans laquelle Ar représente indépendamment un radical aromatique divalent choisi entre phénylène, biphénylène et naphtylène, X représente indépendamment O,

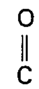

ou une liaison directe et n est un nombre entier de 0 à 3.

7. Alliage suivant les revendications 1 ou 5 ou 6, dans lequel la poly(aryléther-cétone) porte des motifs répétés de formule:

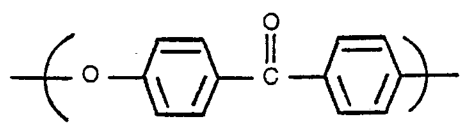

ou

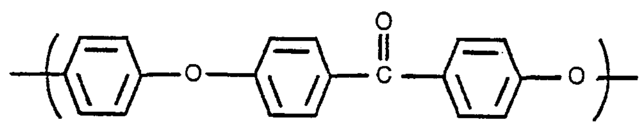

8. Alliage suivant l'une quelconque des revendications précédentes, dans lequel le poly(sulfure d'arylène) et la poly(aryléther-cétone) sont mélangés en quantités de 10 à 90% en poids.

9. Alliage suivant l'une quelconque des revendications précédentes, qui contient en outre au moins un polymère thermoplastique.

10. Alliage suivant la revendication 9, dans lequel le polymère thermoplastique est une polysulfone aromatique, un polycarbonate aromatique ou un polyhydroxyéther aromatique.

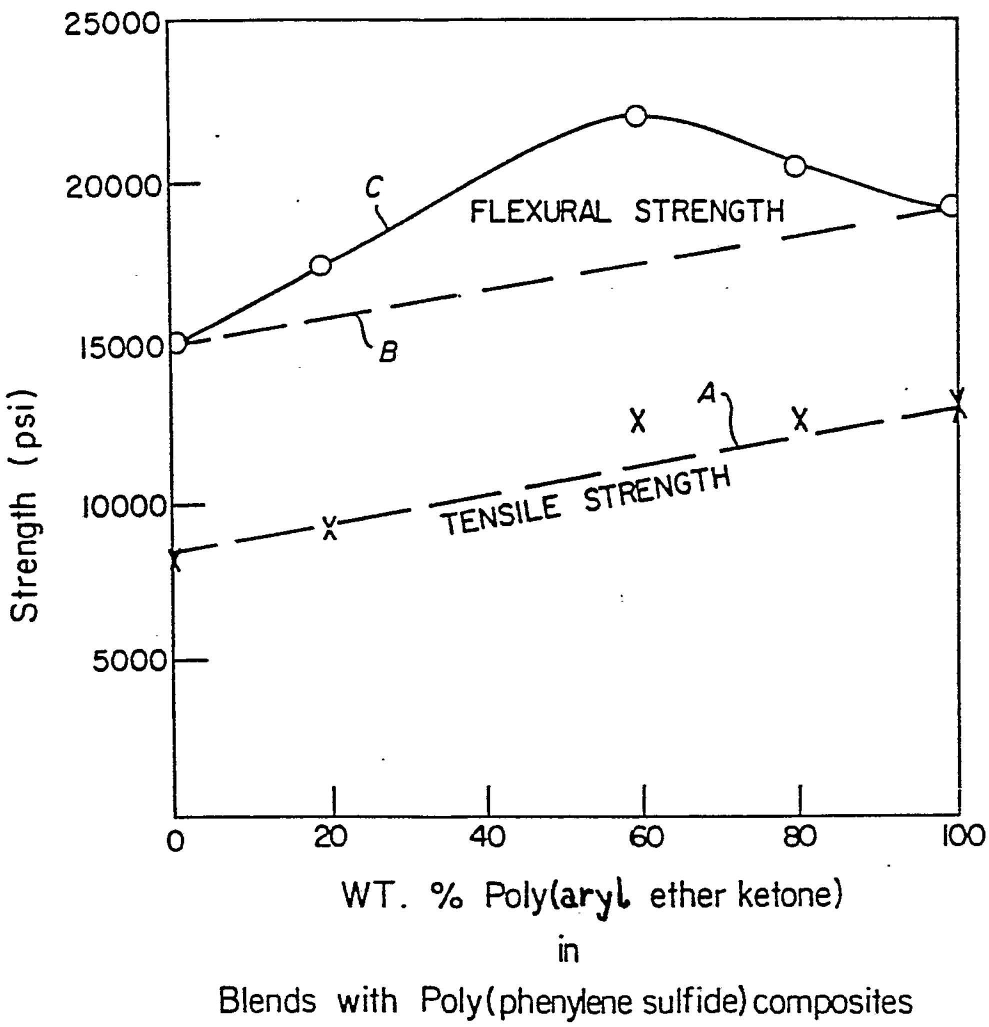
25000
20000
15000
10000
5000
Strength (psi)
C
FLEXURAL STRENGTH
B
A
X
TENSILE STRENGTH
0
20
40
60
80
100
WT. % Poly(aryl ether ketone)
in
Blends with Poly(phenylene sulfide) composites